# DEMANDE DE BREVET EUROPEEN

(11) **EP 1 091 209 A1**
(43) Date de publication de la demande: **11.04.2001**
(21) Numéro de dépôt: 00810867.2
(22) Date de dépôt: 21.09.2000
(51) Int. Cl.: G01N 27/49, G01N 27/416

(54) **Capteur électrochimique à autodiagnostic**

(30) Priorité: 23.09.1999 FR 9911894
(71) Demandeur: C.S.E.M. CENTRE SUISSE D'ELECTRONIQUE ET DE MICROTECHNIQUE SA, 2007 Neuchâtel (CH)
(72) Inventeur: Madore, Charles, 2036 Cormondrèche (CH); Skinner, Nigel, 2024 St-Aubin (CH)
(74) Mandataire: Gresset, Jean

(57) **Abrégé**

L'invention concerne un capteur électrochimique comportant une cellule de mesure (10) équipée d'une électrode de travail active (14), d'une électrode de référence (18) et d'une contre-électrode (16) et un circuit électronique (24) de détermination de la concentration, en un composé chimique recherché, d'une solution contenue dans la cellule. Il est caractérisé en ce que la cellule (10) est équipée d'une pluralité d'électrodes de travail non actives (14) et en ce qu'il comporte, en outre:
- des moyens de diagnostic (26, 28, 32) pour tester périodiquement la réponse de l'électrode de travail active; et
- des moyens de connexion (30) répondant aux moyens de diagnostic pour, en cas de détection de la détérioration de l'électrode active, mettre en service à sa place l'une des électrodes de travail non actives.

## Description

La présente invention se rapporte aux capteurs électrochimiques. Elle concerne, plus particulièrement, un capteur électrochimique du type comportant une cellule de mesure équipée d'une électrode de travail active, d'une électrode de référence et d'une contre-électrode et un circuit de détermination de la concentration, en un composé chimique recherché, d'une solution contenue dans la cellule.

Un capteur électrochimique de ce type trouve une application particulièrement intéressante dans l'analyse environnementale, le contrôle de qualité industrielle et l'analyse biomédicale. Il est typiquement conçu pour la détection ampérométrique, selon laquelle, un potentiel constant étant appliqué entre l'électrode de travail et l'électrode de référence, on mesure le courant entre l'électrode de travail et la contre-électrode, dont la valeur est proportionnelle à la concentration recherchée.

Dans les applications de contrôle en ligne, le bon fonctionnement et la stabilité de l'électrode de travail sont des conditions essentielles pour réduire les coûts de maintenance et d'opération. Or, on sait que cette électrode a une durée de vie limitée. Par exemple, dans le cas de la mesure en continu de la concentration du chlore dans l'eau, l'électrode de travail peut être contaminée par les diverses impuretés présentes, ce qui fausse fortement la mesure.

La présente invention a principalement pour but de fournir un capteur électrochimique dont le bon fonctionnement est automatiquement garanti sur une longue durée.

Pour atteindre ce but, le capteur selon l'invention, du type décrit ci-dessus, est caractérisé en ce que sa cellule est équipée d'une pluralité d'électrodes de travail non actives et en ce qu'il comporte, en outre:
- des moyens de diagnostic pour tester périodiquement la réponse de l'électrode de travail active en effectuant les opérations suivantes:
   . application d'une tension sinusoïdale entre l'électrode de travail active et l'électrode de référence;
   . détermination du spectre d'impédance, sur une plage de fréquence donnée, du système électrochimique formé par lesdites électrodes;
   . analyse dudit spectre pour obtenir au moins un paramètre qui le caractérise;
   . comparaison de la valeur dudit paramètre avec une valeur de référence mémorisée; et
   . émission d'un ordre de déconnexion de l'électrode de travail si l'écart entre ces deux valeurs dépasse un seuil déterminé; et
- des moyens de connexion répondant à cet ordre pour, en cas de détection de la détérioration de l'électrode active, mettre en service à sa place l'une des électrodes de travail non actives.

De façon avantageuse, le capteur selon l'invention présente encore les caractéristiques suivantes:
- l'ensemble des électrodes de travail sont disposées en un réseau régulier, à égale distance les unes des autres;
- la surface de la contre-électrode est sensiblement supérieure à celle d'une électrode de travail;
- l'électrode de référence est séparée du réseau des électrodes de travail d'une distance d'au moins trois fois l'espacement de celles-ci;
- les électrodes de travail et la contre-électrode sont en un matériau conducteur chimiquement inerte tel que le carbone, le carbone vitreux, le diamant, l'or et le platine;
- l'électrode de référence est de type Ag/AgCI; et
- les électrodes de travail non actives sont revêtues d'un film polymérique de protection.

Selon une forme de réalisation préférée de l'invention, le circuit électronique, qui comporte un potentiostat, est agencé pour appliquer un potentiel entre l'électrode de référence et l'électrode de travail active, mesurer le courant résultant entre cette dernière et la contre-électrode et dériver de cette mesure la valeur de la concentration du composé chimique recherché.

Les moyens de connexion comprennent un multiplexeur commandé par les moyens de diagnostic et intercalé entre le circuit de détermination de la concentration et chacune des électrodes de travail individuellement.

L'opération de détermination du spectre d'impédance comprend avantageusement, pour une pluralité de fréquences de la plage balayée:
- la mesure des parties réelles et imaginaires du potentiel et du courant dans le système électrochimique; puis
- l'obtention des parties réelles et imaginaires de l'impédance en divisant les parties réelles et imaginaires du potentiel par les parties réelles et imaginaires du courant.

L'opération d'analyse du spectre d'impédance est réalisée, de préférence, en déterminant, par régression non linéaire de ses parties réelles et imaginaires, les valeurs de la résistance ohmique de la solution entre l'électrode de travail active et l'électrode de référence, la capacité de la double couche électrode de travail - solution et la résistance de transfert de charge à l'interface électrode de travail - solution.

Enfin, le capteur selon l'invention comporte avantageusement des moyens pour éliminer le film de protection des électrodes de travail au moment de leur mise en service.

D'autres caractéristiques de l'invention ressortiront de la description qui va suivre faite en regard du dessin annexé sur lequel:
- la figure 1 est un schéma de principe d'un capteur selon l'invention;
- la figure 2 est le schéma du circuit équivalent utilisé pour l'analyse du spectre d'impédance du système; et
- la figure 3 est un organigramme montrant la suite des opérations effectuées pour permettre au capteur de fonctionner toujours avec une électrode de travail en bon état.

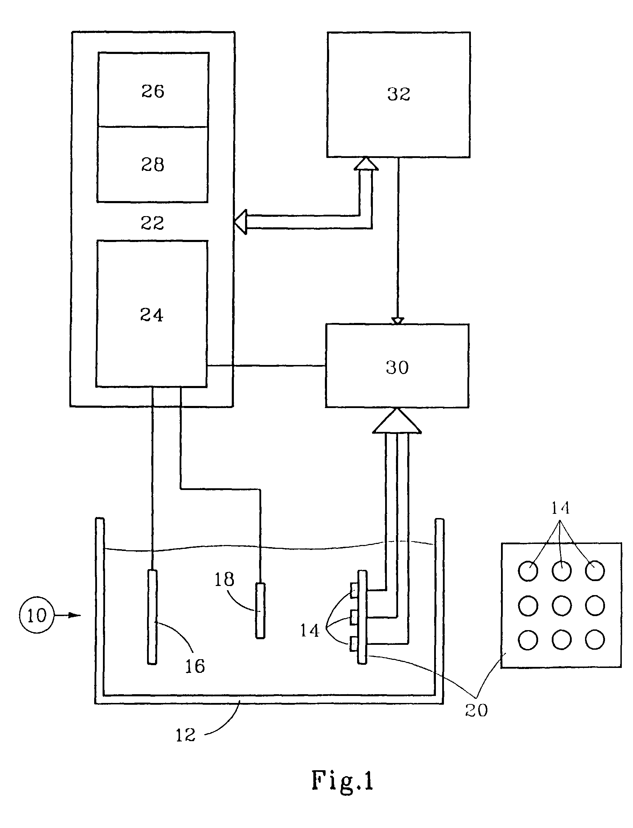

On se référera tout d'abord à la figure 1 qui montre une cellule de mesure 10 comportant un bac 12 destiné à recevoir une solution contenant un électrolyte dont il s'agit de déterminer la concentration et, à l'intérieur de ce bac, un ensemble d'électrodes de travail 14, une contre-électrode 16 et une électrode de référence 18 intercalée entre les électrodes de travail et la contre-électrode.

Les électrodes de travail, au nombre de 9 dans l'exemple décrit, sont rassemblées en un réseau carré sur une plaque support isolante 20, chacune étant à égale distance de ses voisines. Dans l'exemple décrit, cet espacement est de 10 mm. Elles pourraient aussi être disposées en ligne, en cercle ou selon tout autre motif régulier. Ces électrodes sont sous la forme de disques ayant, typiquement, une surface de 1,5 mm².

L'électrode de référence 18 est séparée du réseau des électrodes de travail 14 d'une distance d'au moins trois fois l'espacement de celles-ci.

La contre-électrode 16 se présente sous la forme d'une plaque dont la surface est, au moins, dix fois supérieure à celle des électrodes de travail 14. La distance qui la sépare de l'électrode de référence 18 est sensiblement égale à celle qui sépare cette dernière des électrodes de travail 14.

Les électrodes de travail 14 et la contre-électrode 16 sont en un matériau conducteur chimiquement inerte tel que le carbone, le carbone vitreux, le diamant, l'or, le platine ou tout autre matériau approprié, alors que l'électrode de référence 18 est de type Ag/AgCI, calomel ou de tout autre type approprié.

Les électrodes de travail 14 sont initialement revêtues d'un film polymérique de protection qui, comme il sera décrit plus loin, est éliminé au moment de leur mise en service. Le polymère constituant ce film est, avantageusement, un polyaniline, par exemple de la marque Versicon d'Allied Signal Corp. NY.

Sur la figure 1, on a représenté en 22 un circuit rassemblant un potentiostat 24 et un générateur de fonction programmable en fréquence 26 associé à un analyseur de fonction de transfert 28. Ce circuit est commercialisé par la firme Gamry sous la référence de modèle PC4/FAS1.

La contre-électrode 16 et l'électrode de référence 18 sont reliées directement au potentiostat 24, tandis que les 9 électrodes de travail 14 sont individuellement reliées à un multiplexeur 30 qui permet de les connecter sélectivement, devenant alors électrode de travail active, au potentiostat 24. Le multiplexeur 30 est avantageusement du type Gamry ECM8.

Un ordinateur 32 de type PC, doté d'un logiciel commercialement disponible, tel que CMS3000 pour Windows, commande à la fois le circuit 22 et le multiplexeur 30.

Le potentiostat 24 applique en permanence, entre l'électrode de travail active 14 et l'électrode de référence 18, un potentiel constant approprié pour la mesure ampérométrique, typiquement entre 0 et -1 V. En même temps, il effectue une mesure du courant entre l'électrode de travail active 14 et la contre-électrode 16. Le signal qu'il délivre à sa sortie, d'amplitude proportionnelle la concentration de l'électrolyte recherché dans la solution traversant le bac 12, est reçu par l'ordinateur 32 qui fournit, par tout moyen approprié, une indication de la valeur de cette concentration.

Pour certaines applications, le potentiostat 24 peut appliquer aux électrodes successivement plusieurs potentiels différents. Outre la possibilité de détecter plusieurs électrolytes, cette manière d'opérer offre l'avantage de réduire la dégénérescence des électrodes.

Le circuit 22, le multiplexeur 30 et l'ordinateur 32 ont pour fonction de tester périodiquement la réponse de l'électrode de travail active 14 et, en cas, de détérioration de son fonctionnement, de mettre en service à sa place l'une des autres électrodes de travail.

Le diagnostic d'un mauvais fonctionnement d'une électrode de travail est réalisé à l'aide d'une mesure d'impédance électrochimique. Plus précisément, la méthode consiste à effectuer périodiquement une modulation sinusoïdale de faible amplitude du potentiel appliqué entre cette électrode et l'électrode de référence 18 et à en observer les effets sur l'impédance du système que forment les électrodes, pour une pluralité de fréquences. Typiquement, les fréquences balayées vont de 1 Hz à 100 kHz. Le spectre d'impédance ainsi obtenu est ensuite évalué à l'aide d'un circuit équivalent dont on détermine les paramètres caractéristiques, tels que la capacitance, la résistance ohmique et la résistance de transfert de charge. Un mauvais fonctionnement de l'électrode de travail est diagnostiqué par une modification significative de l'un, au moins, de ces paramètres.

Pour réaliser ces opérations d'auto-diagnostic, l'ordinateur 32 envoie périodiquement au générateur programmable 26, par exemple une fois par heure, l'instruction de superposer une perturbation sinusoïdale au potentiel constant appliqué par le potentiostat 24. Typiquement, l'amplitude de la modulation en potentiel est de 10 mV.

L'analyseur 28, qui possède deux canaux permettant de mesurer simultanément le potentiel et le courant du système électrochimique formé par les électrodes, calcule alors les parties réelles et imaginaires de ces deux quantités pour une pluralité de fréquences couvrant le gamme susmentionnée. De façon avantageuse, la mesure est effectuée tous les 500 Hz. La méthode utilisée peut être celle décrite par C. Gabrielli dans la publication "Identification of Electrochemical Processes by Frequency Response Analysis" (Solartron Schlumberger, Paris 1980, p.314).

Pour chacune des mesures effectuées, l'analyseur 28 calcule ensuite les parties réelles et imaginaires de l'impédance du système électrochimique en divisant les parties réelles et imaginaires du potentiel par les parties réelles et imaginaires du courant.

Ainsi est obtenu le spectre des parties réelles et imaginaires de l'impédance du système électrochimique dans la gamme des fréquences balayées.

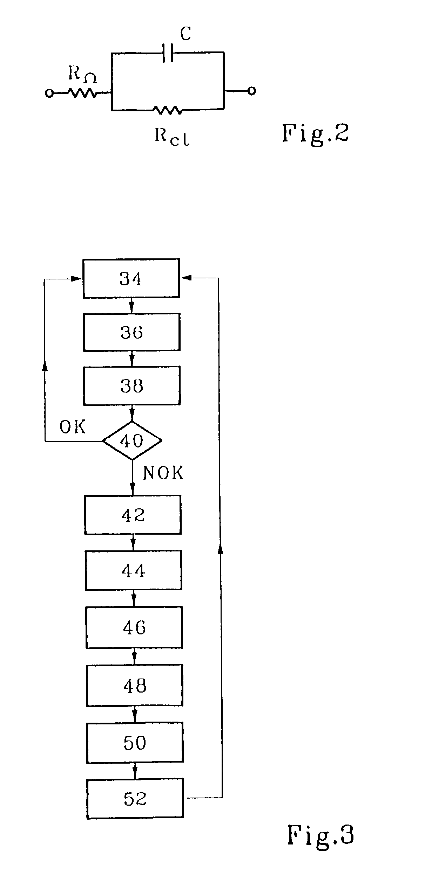

Ce spectre va alors être analysé sur la base du circuit équivalent de la figure 2 qui caractérise le comportement électrique du système. Il comporte une résistance R_{Ω} en série avec une capacité C et une résistance R_{ct} branchées en parallèle. R_{Ω} représente la résistance ohmique de la solution entre l'électrode de travail active 14 et l'électrode de référence 18, C la capacité de la double couche électrode de travail - solution et R_{ct} la résistance de transfert de charge à l'interface électrode de travail - solution.

Plus précisément, l'ordinateur 32 calcule les valeurs de ces trois paramètres par régression non linéaire des parties réelles et imaginaires du spectre d'impédance obtenu. La régression est avantageusement réalisée à l'aide du programme CMS300 ou du programme LEVM développé par J. R. MacDonald.

Selon l'invention, le suivi, par l'ordinateur 32, de l'évolution des paramètres ainsi mesurés permet de diagnostiquer le mauvais état de l'électrode de travail active. Selon le composé chimique recherché, on a besoin soit d'un seul de ces paramètres, soit de deux d'entre d'eux, soit des trois à la fois. Dans le cas du chlore, par exemple, R_{Ω} et C ne varient pas significativement entre électrodes neuves et électrodes usées. En revanche, une augmentation importante de la valeur de R_{ct} est observée avec le vieillissement de l'électrode. Typiquement, pour des surfaces d'électrode et un électrolyte donnés, le produit de cette valeur de résistance par la surface de l'électrode peut passer de 3,4 kΩ.cm² pour une électrode neuve à 4,9 - 8,0 kΩ.cm² pour une électrode vieillie. Ainsi, pour le chlore, une augmentation de la valeur de R_{ct} supérieure à 50% de sa valeur initiale est choisie comme critère permettant de décider qu'une électrode de travail ne fonctionne plus correctement et doit donc être remplacée.

Lorsque cela se produit, l'ordinateur 32 donne l'ordre au multiplexeur 30 de déconnecter l'électrode de travail active 14 du potentiostat 24 et de connecter à sa place l'électrode suivante. Le potentiostat applique alors, entre cette nouvelle électrode de travail 14 et l'électrode de référence 18, une tension permettant l'élimination par oxydation du film polymérique qui la recouvre. Typiquement, dans le cas d'une électrode de travail en platine et d'une électrode de référence de type Ag/AgCI, l'enlèvement du film est obtenu par l'application d'une tension de 1 volt pendant 30 s.

On se référera maintenant à la figure 3 qui représente le diagramme logique des différentes opérations décrites ci-dessus, exécutées sous les ordres de l'ordinateur 32.

L'opération 34 est celle qui correspond au fonctionnement normal du capteur, durant lequel la mesure du courant entre l'électrode de travail active 14 et la contre-électrode 16 permet, à l'aide du potentiostat 24 et de l'ordinateur 32, de fournir la valeur de la concentration de l'électrolyte recherché dans la solution traversant le bac 12.

Périodiquement, la mesure ampérométrique 34 est interrompue pour procéder, en 36, à la détermination du spectre d'impédance du système dans la gamme des fréquences balayées. Comme déjà mentionné, cette phase comprend les opérations suivantes:
- superposition d'une perturbation sinusoïdale au potentiel constant appliqué par le potentiostat 24 entre l'électrode de travail active 14 et l'électrode de référence 18; et
- mesure, à l'aide de l'analyseur 28, pour une pluralité de fréquences de la gamme balayée, des parties réelles et imaginaires du potentiel et du courant résultants, puis des parties réelles et imaginaires de l'impédance du système; et
- mise en mémoire de ces valeurs pour constituer le spectre d'impédance.

L'opération suivante est, en 38, l'analyse du spectre d'impédance qui est réalisée en calculant, par régression non linéaire de ses parties réelles et imaginaires, les valeurs des trois paramètres R_{Ω}, C et R_{ct}.

On effectue ensuite, lors de l'opération 40, le diagnostic proprement dit de l'électrode de travail active 14 en comparant la valeur de l'un, au moins, des trois paramètres mesurés avec une valeur de référence mémorisée qui est avantageusement sa valeur initialement mesurée lorsque l'électrode a été mise en service pour la première fois.

Si l'écart entre les deux valeurs est inférieur à un seuil prédéterminé, l'électrode de travail active est reconnue comme étant en bon état et le capteur reprend l'opération 34 de mesure ampérométrique.

Si, au contraire, l'écart entre les deux valeurs est supérieur au seuil, cela signifie que l'électrode de travail n'est plus en état de fonctionner correctement. Le programme effectue alors, à l'aide du multiplexeur 30:
- en 42, la déconnexion de l'électrode de travail usagée;
- en 44, la connexion d'une nouvelle électrode de travail;
- en 46, l'élimination de son film de protection.

Lorsque ces opérations sont terminées, le capteur procède:
- en 48, par une opération identique à l'opération 36, à la détermination du nouveau spectre d'impédance du système;
- en 50, par une opération identique à l'opération 38, à l'analyse du spectre d'impédance pour obtenir, par régression non linéaire de ses parties réelles et imaginaires, les nouvelles valeurs des trois paramètres R_{Ω}, C et R_{ct}; puis,
- en 52, la mise en mémoire de ces valeurs qui serviront de références pour les prochaines opérations de diagnostic 40.

Le capteur peut alors reprendre, en 34, son fonctionnement normal de mesure ampérométrique.

Il faut noter qu'en variante, on peut utiliser des valeurs de référence fixes à la place de valeurs de référence régulièrement remises à jour.

Ainsi est donc réalisé un capteur électrochimique dont le bon fonctionnement est automatiquement garanti sur une longue durée.

## Revendications

1. Capteur électrochimique comportant une cellule de mesure (10) équipée d'une électrode de travail active (14), d'une électrode de référence (18) et d'une contre-électrode (16) et un circuit électronique (24) de détermination de la concentration, en un composé chimique recherché, d'une solution contenue dans la cellule, caractérisé en ce que ladite cellule est équipée d'une pluralité d'électrodes de travail non actives (14) et en ce qu'il comporte, en outre:
- des moyens de diagnostic (26, 28, 32) pour tester périodiquement la réponse de l'électrode de travail active en effectuant les opérations suivantes:
. application d'une tension sinusoïdale entre l'électrode de travail active (14) et l'électrode de référence (18);
. détermination du spectre d'impédance, sur une plage de fréquence donnée, du système électrochimique formé par lesdites électrodes;
. analyse dudit spectre pour obtenir au moins un paramètre qui le caractérise;
. comparaison de la valeur dudit paramètre avec une valeur de référence mémorisée; et
. émission d'un ordre de déconnexion de l'électrode de travail si l'écart entre ces deux valeurs dépasse un seuil déterminé; et
- des moyens de connexion (30) répondant audit ordre pour, en cas de détection de la détérioration de l'électrode active, mettre en service à sa place l'une des électrodes de travail non actives.

2. Capteur électrochimique selon la revendication 1, caractérisé en ce que l'ensemble des électrodes de travail (14) sont disposées en un réseau.

3. Capteur électrochimique selon la revendication 1, caractérisé en ce que la surface de la contre-électrode (16) est sensiblement supérieure à celle d'une électrode de travail (14).

4. Capteur électrochimique selon la revendication 1, caractérisé en ce que l'électrode de référence (18) est séparée du réseau des électrodes de travail (14) d'une distance d'au moins trois fois l'espacement de celles-ci.

5. Capteur électrochimique selon la revendication 1, caractérisé en ce que les électrodes de travail (14) sont en un matériau conducteur chimiquement inerte, tel que le carbone, le carbone vitreux, le diamant, l'or et le platine.

6. Capteur électrochimique selon la revendication 1, caractérisé en ce que la contre-électrode (16) est en un matériau conducteur chimiquement inerte, tel que le carbone, le carbone vitreux, le diamant, l'or et le platine.

7. Capteur électrochimique selon la revendication 1, caractérisé en ce que l'électrode de référence (18) est de type Ag/AgCI.

8. Capteur électrochimique selon la revendication 1, caractérisé en ce que les électrodes de travail non actives sont revêtues d'un film polymérique de protection.

9. Capteur électrochimique selon la revendication 1, caractérisé en ce que ledit circuit électronique est agencé pour appliquer un potentiel entre l'électrode de référence (18) et l'électrode de travail active (14), mesurer le courant résultant entre cette dernière et la contre-électrode (16) et dériver de cette mesure la valeur de la concentration du composé chimique recherché.

10. Capteur électrochimique selon la revendication 9, caractérisé en ce que ledit circuit comprend un potentiostat (24).

11. Capteur électrochimique selon la revendication 1, caractérisé en ce que lesdits moyens de connexion comprennent un multiplexeur (30) commandé par lesdits moyens de diagnostic (26, 28, 32) et intercalé entre le circuit de détermination de la concentration (24) et chacune des électrodes de travail (14) individuellement.

12. Capteur électrochimique selon la revendication 1, caractérisé en ce que ladite plage de fréquence va de 1 Hz à 100 kHz.

13. Capteur électrochimique selon la revendication 1, caractérisé en ce que, pour réaliser l'opération de détermination du spectre d'impédance, lesdits moyens de diagnostic (26, 28, 32) sont agencés pour effectuer, pour une pluralité de fréquences de ladite plage:
- la mesure des parties réelles et imaginaires du potentiel et du courant dans le système électrochimique; puis
- la mesure des parties réelles et imaginaires de l'impédance en divisant les parties réelles et imaginaires du potentiel par les parties réelles et imaginaires du courant.

14. Capteur électrochimique selon la revendication 13, caractérisé en ce que, pour réaliser l'opération d'analyse du spectre d'impédance, lesdits moyens de diagnostic (26, 28, 32) sont agencés pour calculer, par régression non linéaire de ses parties réelles et imaginaires, les valeurs de la résistance ohmique de la solution entre l'électrode de travail active et l'électrode de référence, la capacité de la double couche électrode de travail - solution et la résistance de transfert de charge à l'interface électrode de travail - solution.

15. Capteur électrochimique selon la revendication 8, caractérisé en ce qu'il comporte, en outre, des moyens pour éliminer le film de protection des électrodes de travail au moment de leur mise en service.
